# EUROPEAN PATENT SPECIFICATION

(11) **EP 0 669 961 B1**
(45) Date of publication and mention of the grant of the patent: **04.02.1998**
(21) Application number: 94901105.0
(22) Date of filing: 11.11.1993
(51) Int. Cl.: C08L 95/00, C10C 3/00, C08J 3/00

(54) **PROCESS FOR IMPROVED HANDLING OF BITUMEN**
VERFAHREN ZUR BESSEREN VERARBEITUNG VON BITUMEN
PROCEDE DESTINE A AMELIORER LA MANIPULATION DU BITUME

(30) Priority: 18.11.1992 SE 9203464
(43) Date of publication of application: 06.09.1995
(73) Proprietor: AKTIEBOLAGET NYNÄS PETROLEUM, S-121 23 Johanneshov (SE)
(72) Inventor: GASTMANS, André, C., C., B-2640 Mortsel (BE)
(74) Representative: Fogelberg, Lennart
(86) International application number: SE9300965
(87) International publication number: WO9411444

(56) References cited:
- EP-A- 0 283 246
- GB-A- 2 255 291
- US-A- 5 096 566

## Description

The present invention relates to a process for improved handling of bitumen. More particularly the present invention relates to a process for reducing the viscosity of bitumen, bitumen-like mixes based on polymer and bitumen and mixes of bitumen and additives.

Bitumen is used to make asphalt mixtures, bituminous membranes for roofings, emulsions for use in road making, anti-corrosion compositions, polymer-bitumen mixes, etc. In order to be handled in the mentioned applications, the bitumen is generally subjected to one of the following manipulations:
A) heating of the bitumen to such an extent that it becomes more or less liquid,
B) mixing the bitumen with solvents, or
C) emulsifying the bitumen with water.

All these three manipulations, i.e. heating, dissolving and emulsifying, have as a goal to reduce the viscosity of the initial properties after cooling, evaporation of the solvent and breaking of the emulsion and separation of the water, respectively.

US-A-5 096 566 describes a process for reducing the viscosity of heavy hydrocarbon oils comprising the mixing of a hot gas to the hot heavy hydrocarbon oil.

The viscosity of the bitumen is expressed in Pa·s when using a dynamic viscosimeter, in mm²/s when using capillary viscosimeters or in other units depending upon the method used in the determination of the viscosity.

Mostly, the rheology of the bitumen at about ambient temperature is described by means of the penetration test (ASTM D5) wherein at 25°C a standard needle penetrates under a load of 100 g in 5 seconds into the bitumen. The penetration is expressed in tenths of a millimetre.

Another test comprises the measuring of the softening point. In this test (ASTM D36) a ring is filled with the bitumen to be tested and is heated under standard conditions at a constant rate of 5°C/min. A ball on top of the bitumen presses on the layer. When the temperature reaches a certain level, the bitumen has softened to such an extent that its deformation range has been reached. The corresponding temperature is called the ring and ball temperature (RB°) and is expressed in degrees centigrade (C°).

Each bitumen grade needs a well defined temperature or a well defined amount of solvent to reach a certain low viscosity at which it is easily handled.

The big problem, however, is that solvents cannot be used without limitations because of health and safety reasons.

Heating cannot be done in all cases without limitations either.

Thus, for instance, in road-making generation of fume limits the use of high temperatures. Also the fact that aging and hardening of the bitumen occurs in a much more dramatic way at substantially increased temperatures limits the use of heating.

Heating of a polymer-bitumen mixture to a high temperature brings the polymer in danger (depolymerisation) or destroys the homogeneity of the polymer/bitumen blend.

Heating of a hard bitumen to too high temperatures when bringing it into the form of an emulsion causes boiling of the water in the ready made emulsion.

Hence it is an object of the present invention to develop a process for reducing the viscosity of bitumen, bitumen-like mixes based on polymer and bitumen and mixes of bitumen and additives which process is not encumbered with the above mentioned drawbacks of the prior art methods based on heating, dissolving or emulsifying.

The present invention is based on the finding that when liquefied bitumen is milled through a mill together with a gas, the gas becomes finely distributed into the bitumen and as a result thereof causes a dramatic reduction of the viscosity. At the same time, the asphaltene clusters in the bitumen are more or less dispersed. Also this dispersion of asphaltene clusters causes a reduction of the viscosity.

In accordance with the above the present invention provides a process for reducing the viscosity of bitumen, bitumen-like mixes based on polymer and bitumen and mixes of bitumen and additives, which process is characterized in that said bitumen or mixes is/are mixed with at least one gas in a dynamic high shear mixer or in a static mixer.

The more intense the mixing, like high shear, and the thinner the layer between stator and rator in a dynamic mixer, the bigger is the viscosity drop and the longer will this low viscosity remain, even after hot storage of the bitumen or bitumen mix for 2-4 hours. However, as indicated above, it is also possible to use static mixers in the process of the present invention but the effects on the viscosity when using static mixers are considerably lower than those obtained by means of high shear mixers.

The gas is added to the bitumen in a continuous way at the entrance of the mill and is milled together with the bitumen.

Depending on the final use of the bitumen or mixes it is possible to select the gas in such a way that in addition to the reduction of the viscosity also other effects are achieved.

According to one embodiment of the process according to the present invention a gas is used which is chemically inert to said bitumen or mixes. The preferred gas in this connection is nitrogen.

According to another embodiment of the process according to the present invention a gas is used which causes a change in the chemical properties of said bitumen or mixes.

For instance, air can be used as the gas which leads to semiblown bitumens. Further examples of gases which causes a chemical transformations of the bitumen or mixes, are ammonia and carbon dioxide.

Using a catalyst in combination with a gas which causes a change in the chemical properties of the bitumen or mixes will have an even more intense effect on the properties of the bitumen or mixes.

The process of the present invention can be applied to all types of bitumen such as straight run bitumens, semiblown bitumens and blown bitumens of different penetration, like 5 penetration up to several hundreds - B 1500 as an example -, bitumen-like mixes based on polymer and bitumen such as mixes with styrene-butadiene-styrene in amounts of 1 to 15 % by weight calculated on the weight of the mixture or ethylene-vinyl acetate 1-20 or others and mixes of bitumen and additives, for instance mixes of bitumen with penetrations between 5 and several hundreds and carbon black, adhesivity improvers, ageing retarders and others.

The uses of the bitumen and bitumen mixes having gas-reduced viscosity (in the following denoted "GRV-bitumen") prepared according to the invention are within the fields of making asphalt mixes, making bitumen emulsions, handling of polymer/bitumen mixes, production of roofing, anti-corrosion coating and membrane application.

The invention will now be further illustrated by means of a number of non-limitative working examples.

### EXAMPLE 1

A 65 penetration bitumen, straight-run, was treated in a high shear mill from Probst und Class, Rastatt, Germany, type PUC-NA 60-RD, with nitrogen.

| | |
|---|---|
| Temperature | 150°C |
| Gap width | 0.25 mm |
| Rotor speed | 3000 rev/min |
| Bitumen quantity | 0.85 l/min |
| Nitrogen quantity | not measured (free suction to open air) |

The viscosity was measured at shear rate 3 sec⁻¹ in a layer thickness of 1 mm - plate/plate configuration. The following results were obtained.

| Temperature (C°) | Viscosity (Pa·s) | |
|---|---|---|
| | original | after 1 pass through mill |
| 60 | 950 | 131 |
| 70 | 308 | 60.1 |
| 80 | 95.2 | 24.1 |
| 90 | 37 | 10.1 |
| 100 | 15.3 | 5.02 |
| 110 | 7.31 | 2.68 |
| 120 | 4.17 | 1.57 |
| 130 | 2.46 | 0.96 |
| 140 | 1.54 | 0.68 |

### EXAMPLE 2

A 5 penetration bitumen, straight-run, was treated under the same conditions as in example 1 but at 180°C.

The viscosity was measured with CARRI-MED at shear rate 3 sec⁻¹ in a layer thickness of 1 mm - plate/plate configuration. The following results were obtained.

| Temperature (C°) | Viscosity (Pa·s) | |
|---|---|---|
| | original | after 1 pass through mill |
| 60 | 1550 | 595 |
| 70 | 388 | 176 |
| 80 | 136 | 84 |
| 90 | 44.8 | 31.2 |
| 100 | 16.9 | 12.3 |
| 110 | 6.92 | 5.52 |
| 120 | 3.31 | 2.79 |
| 130 | 1.72 | 1.46 |

### EXAMPLE 3

A mixture of 94 % by weight of 180/200 penetration straight-run and 6 % by weight of styrene-butadiene-styrene (Finaprene^{R} F 411 from Fina - Belgium), was treated in a high shear mill (from Probst und Class, Rastatt, Germany, type PUC-NA 60-RD) with nitrogen.

| | |
|---|---|
| Temperature of bitumen mix | 190°C |
| Bitumen quantity | 0.380 l/min |
| Gap width | 0.05 mm |
| Rotor speed | 4000 rev/min |
| Nitrogen temperature | ambient |
| Nitrogen quantity | 18 l/min |
| (lowest measurable quantity with present instruments). | |

The viscosity was measured with CARRI-MED at shear rate 3 sec⁻¹ in a layer thickness of 1 mm - plate/plate configuration. The following results were obtained.

| Temperature (C°) | Viscosity (Pa·s) | |
|---|---|---|
| | original | after 1 pass through mill |
| 70 | 672 | 396 |
| 80 | 258 | 152 |
| 90 | 10.3 | 61.4 |
| 100 | 49.5 | 28.0 |
| 110 | 14.21 | 9.42 |
| 120 | 7.69 | 5.32 |
| 130 | 2.12 | 2.00 |

### EXAMPLE 4

A 180/200 bitumen was treated with ammonia gas in a high shear mill (from Probst und Class, Rastatt, Germany, type PUC-NA 60-RD).

| | |
|---|---|
| Temperature of bitumen mix | 250°C |
| Quantity through mill | 0.6 l/min |
| Ammonia temperature | ambient |
| Ammonia quantity | 18 l/min |
| (lowest measurable quantity with present instruments) | |
| Gap width | 0.05 mm |
| Rotor speed | 4000 rev/min |

The influence of the ammonia upon the bitumen was checked by measuring the acidity of the bitumen:

| | |
|---|---|
| Original 180/200 bitumen | 3.69 mg KOH/g |
| 1 x over mill | 3.51 mg KOH/g |
| 2 x over mill | 2.68 mg KOH/g |
| 3 x over mill | 2.54 mg KOH/g |

### EXAMPLE 5

A 180/200 penetration bitumen, straight-run, was treated in a static mixer (Kemics-Tubing 37-08-136, length 416 mm-21 elements from Chemineer, Derby, U.K. with air.

| | | |
|---|---|---|
| Penetration | original bitumen | 184 |
| | after treatment | 265 |
| | | |
| Softening point | original bitumen | 38.2°C |
| | after treatment | 32.8°C |

The viscosity was measured with CARRI-MED at shear rate 3 sec⁻¹ in a layer thickness of 1 mm - plate/plate configuration. The following results were obtained.

| Temperature (C°) | Viscosity (Pa·s) | |
|---|---|---|
| | original | after 1 pass through mill |
| 60 | 88 | 24.2 |
| 70 | 24.4 | 8.48 |
| 80 | 8.3 | 3.35 |
| 90 | 3.9 | 1.57 |
| 100 | 1.6 | 0.83 |
| 110 | 0.77 | 0.52 |
| 120 | 0.42 | 0.32 |

## Claims

1. Process for reducing the viscosity of bitumen, bitumen-like mixes based on polymer and bitumen and mixes of bitumen and additives, **characterized** in that said bitumen or mixes is/are liquefied and mixed with at least one gas in a dynamic high shear mixer or in a static mixer.

2. Process according to claim 1, **characterized** in that a gas is used which is chemically inert to said bitumen or mixes.

3. Process according to claim. 1, **characterized** in that the gas is nitrogen.

4. Process according to claim 1, **characterized** in that a gas is used which causes a change in the chemical properties of said bitumen or mixes.

5. Process according to claim 4, **characterized** in that the gas is air, ammonia or carbon dioxide.

6. Process according to any of claims 4 and 5, **characterized** in that the bitumen or mix is mixed with the gas in the presence of a catalyst.

## Patentansprüche

1. Verfahren zur Verringerung der Viskosität von Bitumen, auf Bitumen und Polymer basierenden Butumenähnlichen Gemischen und Gemischen von Bitumen und Additiven, dadurch gekennzeichnet, daß der Bitumen oder die Gemische verflüssigt und mit mindestens einem Gas in einem dynamischen Rührmischer hoher Scherkraft oder einem statischen Mischer gemischt wird/werden.

2. Verfahren nach Anspruch 1, dadurch gekennzeichnet, daß ein in Bezug auf den Bitumen oder die Gemische chemisch inertes Gas verwendet wird.

3. Verfahren nach Anspruch 1, dadurch gekennzeichnet, daß das Gas Stickstoff ist.

4. Verfahren nach Anspruch 1, dadurch gekennzeichnet, daß ein Gas verwendet wird, welches eine Veränderung der chemischen Eigenschaften des Bitumens oder der Gemische verursacht.

5. Verfahren nach Anspruch 4, dadurch gekennzeichnet, daß das Gas Luft, Ammoniak oder Kohlendioxid ist.

6. Verfahren nach einem der Ansprüche 4 und 5, dadurch gekennzeichnet, daß der Bitumen oder die Gemische mit dem Gas in Anwesenheit eines Katalysators gemischt werden.

## Revendications

1. Procédé pour réduire la viscosité du bitume, de mélanges analogues au bitume à base de polymère et de bitume et de mélanges de bitume et d'additifs, caractérisé en ce que ledit bitume ou lesdits mélanges est/sont liquéfiés et mélangés avec au moins un gaz dans un mélangeur dynamique à cisaillement élevé ou dans un mélangeur statique.

2. Procédé selon la revendication 1, caractérisé en ce que l'on utilise un gaz qui est chimiquement inerte par rapport audit bitume ou auxdits mélanges.

3. Procédé selon la revendication 1, caractérisé en ce que le gaz est de l'azote.

4. Procédé selon la revendication 1, caractérisé en ce que l'on utilise un gaz qui entraîne une modification des propriétés chimiques dudit bitume ou desdits mélanges.

5. Procédé selon la revendication 4, caractérisé en ce que le gaz est de l'air, de l'ammoniac ou du gaz carbonique.

6. Procédé selon l'une quelconque des revendications 4 et 5, caractérisé en ce que le bitume ou le mélange est mélangé avec le gaz en présence d'un catalyseur.
